# EUROPÄISCHE PATENTANMELDUNG

(11) **EP 1 145 942 A2**
(43) Veröffentlichungstag der Anmeldung: **17.10.2001**
(21) Anmeldenummer: 01104454.2
(22) Anmeldetag: 28.02.2001
(51) Int. Cl.: B62D 65/00

(54) **Begehbare Plattformanordnung**

(30) Priorität: 13.04.2000 DE 20006862 U
(71) Anmelder: Dürr Systems GmbH, 70435 Stuttgart (DE)
(72) Erfinder: Müller Günther, 70499 Stuttgart (DE); Walter Günther, 71696 Möglingen (DE)
(74) Vertreter: Hoeger, Stellrecht & Partner

(57) **Zusammenfassung**

Um eine begehbare Plattformanordnung, umfassend mindestens eine erste Teilplattform (222a), die aus einer Ruhestellung längs einer Ausziehrichtung (112) in eine Arbeitsstellung bewegbar ist, und eine zweite Teilplattform (222b,222c), die in der Arbeitsstellung hinter der ersten Teilplattform angeordnet ist, wobei eine hintere Begrenzungskante (200) der ersten Teilplattform und eine vordere Begrenzungskante (242) der zweiten Teilplattform in der Ruhestellung vertikal voneinander beabstandet sind, zu schaffen, bei welcher die Unfallgefahr für eine die Plattformanordnung in der Arbeitsstellung begehende Bedienungsperson verringert ist, wird vorgeschlagen, daß die Plattformanordnung (104a,104b) Führungsmittel umfaßt, durch welche die Relativbewegung zwischen der ersten Teilplattform (222a) und der zweiten Teilplattform (222b,222c) beim Bewegen der ersten Teilplattform in die Arbeitsstellung so geführt wird, daß der vertikale Abstand zwischen der hinteren Begrenzungskante (200) der ersten Teilplattform und der vorderen Begrenzungskante (242) der zweiten Teilplattform in der Arbeitsstellung kleiner ist als in der Ruhestellung.

## Beschreibung

Die vorliegende Erfindung betrifft eine begehbare Plattformanordnung, die mindestens eine erste Teilplattform, die aus einer Ruhestellung längs einer Ausziehrichtung in eine Arbeitsstellung bewegbar ist, und eine zweite Teilplattform, die in der Arbeitsstellung hinter der ersten Teilplattform angeordnet ist, umfaßt, wobei eine hintere Begrenzungskante der ersten Teilplattform und eine vordere Begrenzungskante der zweiten Teilplattform in der Ruhestellung vertikal voneinander beabstandet sind.

Solche Plattformanordnungen sind aus dem Stand der Technik bekannt.

Insbesondere sind solche Plattformanordnungen bekannt, welche Gitterroste umfassen und in Automatenzonen von Spritzkabinen in Fahrzeugkarosserie-Lackieranlagen dazu eingesetzt werden, zu Wartungszwecken eine begehbare Plattform zu schaffen, während die Teilplattformen dieser bekannten begehbaren Plattformanordnungen in der Ruhestellung so zusammengeschoben werden, daß die Teilplattformen übereinander liegen.

Bei den bekannten begehbaren Plattformanordnungen ist jedoch von Nachteil, daß in der Arbeitsstellung der jeweiligen Plattformanordnung zwischen den Teilplattformen Stufen ausgebildet sind, welche eine Unfallgefahr darstellen, da eine die Plattformanordnung zu Wartungszwecken begehende Bedienungsperson an einer solchen Stufe stolpern und sich ernsthaft verletzen kann.

Der vorliegenden Erfindung liegt daher die Aufgabe zugrunde, eine begehbare Plattformanordung der eingangs genannten Art zu schaffen, bei welcher die Unfallgefahr für eine die Plattformanordnung in der Arbeitsstellung begehende Bedienungsperson verringert ist.

Diese Aufgabe wird bei einer begehbaren Plattformanordnung mit den Merkmalen des Oberbegriffs von Anspruch 1 erfindungsgemäß dadurch gelöst, daß die Plattformanordnung Führungsmittel umfaßt, durch welche die Relativbewegung zwischen der ersten Teilplattform und der zweiten Teilplattform beim Bewegen der ersten Teilplattform in die Arbeitsstellung so geführt wird, daß der vertikale Abstand zwischen der hinteren Begrenzungskante der ersten Teilplattform und der vorderen Begrenzungskante der zweiten Teilplattform in der Arbeitsstellung kleiner ist als in der Ruhestellung.

Gemäß dem erfindungsgemäßen Konzept wird die Höhe der Stufe, welche in der Arbeitsstellung der Plattformanordnung zwischen den beiden Teilplattformen entsteht, gegenüber den bekannten Plattformanordnungen verringert, so daß die Gefahr, daß eine die Plattformanordnung begehende Bedienungsperson an einer solchen Stufe stolpert oder hängen bleibt, deutlich verringert ist.

Ein Abschrägen des vorderen Randes der höher liegenden Teilplattform alleine würde den gewünschten Effekt nicht haben, da insbesondere in Spritzkabinen einer Fahrzeugkarosserie-Lackieranlage die Gitterroste der Plattformanordnung stark eingefettet werden, so daß an abgeschrägten Stellen der Plattformanordnung eine erhebliche Rutschgefahr bestehen würde, wodurch die Unfallgefahr eher erhöht als verringert würde.

Besonders günstig ist es, wenn die Führungsmittel so ausgebildet sind, daß der vertikale Abstand zwischen der hinteren Begrenzungskante der ersten Teilplattform und der vorderen Begrenzungskante der zweiten Teilplattform in der Arbeitsstellung kleiner ist als die Dicke der zweiten Teilplattform. Dadurch ist gewährleistet, daß die Höhe der in der Arbeitsstellung zwischen den beiden Teilplattformen gebildeten Stufe kleiner ist als die Dicke der höher liegenden Teilplattform, so daß an einer solchen Stufe der Fuß einer Bedienungsperson nicht unter die höher liegende zweite Teilplattform gelangen und auf diese Weise an der zweiten Teilplattform hängen bleiben kann. Hierdurch wird die Unfallgefahr wesentlich verringert im Vergleich zu einer Plattformanordnung, bei welcher die Stufenhöhe größer ist als die Dicke der höher angeordneten Teilplattform, so daß der Fuß einer Bedienungsperson unter die höher liegende Teilplattform gelangen kann.

Bei einer bevorzugten Ausführungsform ist vorgesehen, daß die Führungsmittel so ausgebildet sind, daß der vertikale Abstand zwischen der hinteren Begrenzungskante der ersten Teilplattform und der vorderen Begrenzungskante der zweiten Teilplattform in der Arbeitsstellung im wesentlichen Null ist. Dadurch ist im wesentlichen gar keine Stufe mehr zwischen den beiden Teilplattformen in der Arbeitsstellung gebildet, so daß längs der Trennstelle zwischen den beiden Teilplattformen keine wesentlich höhere Unfallgefahr besteht als an anderen Stellen der Plattformanordnung.

Grundsätzlich kommt für die Realisierung der erfindungsgemäßen Plattformanordnung jede Relativbewegung zwischen den beiden Teilplattformen in Betracht, welche zum Ergebnis hat, daß der vertikale Abstand zwischen der hinteren Begrenzungskante der ersten Teilplattform und der vorderen Begrenzungskante der zweiten Teilplattform in der Arbeitsstellung gegenüber der Ruhestellung verringert wird.

Beispielsweise könnte also vorgesehen sein, daß die Führungsmittel so ausgebildet sind, daß die hintere Begrenzungskante der ersten Teilplattform beim Bewegen der ersten Teilplattform in die Arbeitsstellung angehoben wird.

Bei einer bevorzugten Ausgestaltung der erfindungsgemäßen Plattformanordnung ist jedoch vorgesehen, daß die Führungsmittel so ausgebildet sind, daß die vordere Begrenzungskante der zweiten Teilplattform beim Bewegen der ersten Teilplattform in die Arbeitsstellung abgesenkt wird.

Über die Ausgestaltung der Führungsmittel wurden bislang noch keine näheren Angaben gemacht.

So kann vorgesehen sein, daß die Führungsmittel mindestens ein an der einen Teilplattform angeordnetes erstes Führungselement, vorzugsweise mindestens zwei an der einen Teilplattform angeordnete erste Führungselemente, und mindestens ein an der jeweils anderen Teilplattform angeordnetes zweites Führungselement, vorzugsweise mindestens zwei an der jeweils anderen Teilplattform angeordnete zweite Führungselemente, umfassen.

Insbesondere kann vorgesehen sein, daß das erste Führungselement als Führungsbahn ausgebildet ist, längs welcher das zweite Führungselement geführt wird.

Bei einer besonders einfachen Ausgestaltung der erfindungsgemäßen Plattformanordnung umfaßt die Führungsbahn einen im wesentlichen ebenen Anfangsabschnitt und einen quer zu dem Anfangsabschnitt gerichteten Ablenkabschnitt. Durch die Ablenkung des zweiten Führungselements in dem Ablenkabschnitt der Führungsbahn ist auf einfache Weise gewährleistet, daß sich die beiden Teilplattformen in der gewünschten Weise relativ zueinander bewegen.

Hierbei hat es sich besonders bewährt, wenn der Ablenkabschnitt um einen Winkel von ungefähr 20° bis ungefähr 60°, vorzugsweise um einen Winkel von ungefähr 40° bis ungefähr 50°, gegenüber dem ebenen Anfangsabschnitt der Führungsbahn geneigt ist.

Um die maximale Verschiebung der beiden Teilplattformen längs der Ausziehrichtung relativ zueinander zu beschränken, kann vorgesehen sein, daß die Führungsbahn einen Anschlagbereich zur Begrenzung der Bewegung des zweiten Führungselements relativ zu der Führungsbahn umfaßt.

Ferner kann vorgesehen sein, daß das erste Führungselement einen Aufnahmebereich zur Aufnahme des zweiten Führungselements in der Arbeitsstellung umfaßt. Dadurch wird erreicht, daß die Stellung des ersten Führungselements in der Arbeitsstellung wohldefiniert ist und sich die Teilplattformen der Plattformanordnung in der Arbeitsstellung nicht unbeabsichtigterweise relativ zueinander verschieben, was eine die Plattformanordnung begehende Bedienungsperson gefährden könnte.

Bei einer bevorzugten Ausgestaltung der erfindungsgemäßen Plattformanordnung ist vorgesehen, daß das zweite Führungselement mindestens eine Rolle umfaßt. Durch das Abrollen dieser Rolle auf einem als Führungsbahn ausgebildeten ersten Führungselement werden die beiden Teilplattformen unter sehr geringer Reibung beim Ausziehen in die Arbeitsstellung relativ zueinander geführt.

Die erforderliche Relativbewegung der hinteren Begrenzungskante der ersten Teilplattform und der vorderen Begrenzungskante der zweiten Teilplattform in vertikaler Richtung kann in einfacher Weise dadurch realisiert werden, daß die erste Teilplattform und/oder die zweite Teilplattform um eine im wesentlichen horizontale Schwenkachse schwenkbar ist.

Ferner ist es von Vorteil, wenn die Teilplattformen jeweils einen Halterahmen zur Aufnahme mindestens eines Gitterrostes umfassen. Solche meistens rechteckig ausgebildete Gitterroste sind als Standardbauteile erhältlich, so daß eine solche Gitterroste umfassende Teilplattform besonders einfach und kostengünstig herstellbar ist.

Eine zumindest teilweise aus Gitterrosten gebildete Teilplattform ist ferner einfach zu reinigen.

Grundsätzlich kann die erfindungsgemäße Plattformanordnung aus zwei Teilplattformen gebildet werden, die in der Arbeitsstellung hintereinander angeordnet sind.

Soll die begehbare Plattformanordnung jedoch in der Arbeitsstellung eine möglichst große begehbare Fläche aufweisen und dennoch in der Ruhestellung nur wenig Platz beanspruchen, so ist es von Vorteil, wenn die Plattformanordnung mindestens eine dritte Teilplattform umfaßt, die in der Arbeitsstellung hinter der zweiten Teilplattform angeordnet ist, wobei eine hintere Begrenzungskante der zweiten Teilplattform und eine vordere Begrenzungskante der dritten Teilplattform in der Ruhestellung vertikal voneinander beabstandet sind und die Plattformanordnung Führungsmittel umfaßt, durch welche die Relativbewegung zwischen der zweiten Teilplattform und der dritten Teilplattform beim Bewegen der zweiten Teilplattform in die Arbeitsstellung so geführt wird, daß der vertikale Abstand zwischen der hinteren Begrenzungskante der zweiten Teilplattform und der vorderen Begrenzungskante der dritten Teilplattform in der Arbeitsstellung kleiner ist als in der Ruhestellung.

Auf diese Weise wird die Höhe der Stufe, die in der Arbeitsstellung zwischen der zweiten und der dritten Teilplattform gebildet wird, zur Verminderung der Unfallgefahr reduziert oder sogar ganz zu Null gemacht. Dabei wird dasselbe Konzept angewandt, welches zur Verminderung der Stufenhöhe zwischen der ersten Teilplattform und der zweiten Teilplattform vorstehend bereits beschrieben wurde.

Das erfindungsgemäße Konzept kann in entsprechender Weise auch auf Plattformanordnungen mit beliebig vielen Teilplattformen ausgedehnt werden.

Die erfindungsgemäße begehbare Plattformanordnung eignet sich insbesondere zur Verwendung in einer Anlage zum Lackieren von Werkstücken, insbesondere von Fahrzeugkarosserien, die eine Fördervorrichtung zum Fördern der Werkstücke durch die Anlage und eine begehbare Plattformanordnung umfaßt, wobei sich die Plattformanordnung längs der Längsrichtung der Fördervorrichtung erstreckt und eine quer, vorzugsweise senkrecht, zur Längsrichtung der Fördervorrichtung ausgerichtete Ausziehrichtung aufweist. Hierbei kann die begehbare Plattformanordnung in der Arbeitsstellung von einer Bedienungsperson begangen werden, um die Fördervorrichtung zu warten, während die Teilplattformen der begehbaren Plattformanordnung in der Ruhestellung längs der Ausziehrichtung von der Fördervorrichtung beabstandet sind, so daß sich die Teilplattformen in der Ruhestellung außerhalb des Arbeitsbereichs der Lackieranlage, in welchem die Werkstücke lackiert werden, befinden und somit nur geringfügig oder gar nicht durch Lacknebel verschmutzt werden.

Weitere Merkmale und Vorteile der Erfindung sind Gegenstand der nachfolgenden Beschreibung und zeichnerischen Darstellung von Ausführungsbeispielen.

In den Zeichnungen zeigen:
- Fig. 1: einen Querschnitt durch eine Fördervorrichtung und beiderseits derselben angeordnete begehbare Plattformanordnungen einer ersten Ausführungsform, die jeweils drei Teilplattformen umfassen;
- Fig. 2: eine Draufsicht auf die Fördervorrichtung und die Plattformanordnungen aus Fig. 1;
- Fig. 3: einen vergrößerten Ausschnitt aus Fig. 1, welcher die erste Ausführungsform der Plattformanordnung in der Arbeitsstellung darstellt;
- Fig. 4: einen vergrößerten Ausschnitt aus Fig. 1, welcher die erste Ausführungsform der Plattformanordnung in der Ruhestellung darstellt;
- Fig. 5: einen Längsschnitt durch die erste Ausführungsform der Plattformanordnung in der Arbeitsstellung im Bereich eines inneren Plattformelements;
- Fig. 6: einen Längsschnitt durch die erste Ausführungsform der Plattformanordnung in der Arbeitsstellung im Bereich eines mittleren Plattformelements;
- Fig. 7: einen Längsschnitt durch die erste Ausführungsform der Plattformanordnung in der Arbeitsstellung im Bereich eines äußeren Plattformelements;
- Fig. 8: einen vergrößerten Ausschnitt aus Fig. 3, welcher eine schwenkbare Halterung einer Teilplattform der ersten Ausführungsform der Plattformanordnung darstellt;
- Fig. 9: eine Seitenansicht der Halterung der Teilplattform aus Fig. 8 in der Ruhestellung;
- Fig. 10: eine Ansicht der Halterung der Teilplattform aus Fig. 9 von hinten;
- Fig. 11: eine teilweise geschnittene Draufsicht auf die Halterung der Teilplattform aus den Fig. 9 und 10;
- Fig. 12: einen Querschnitt durch eine Fördervorrichtung und beiderseits der Fördervorrichtung angeordnete Plattformanordnungen einer zweiten Ausführungsform, welche jeweils zwei Teilplattformen umfaßt;
- Fig. 13: eine Draufsicht auf die Fördervorrichtung und die Plattformanordnungen aus Fig. 12;
- Fig. 14: einen vergrößerten Ausschnitt aus Fig. 12, welcher die zweite Ausführungsform einer Plattformanordnung in der Arbeitsstellung darstellt;
- Fig. 15: einen vergrößerten Ausschnitt aus Fig. 12, welcher die zweite Ausführungsform einer Plattformanordnung in der Ruhestellung darstellt.

Gleiche oder funktional äquivalente Elemente sind in allen Figuren mit denselben Bezugszeichen bezeichnet.

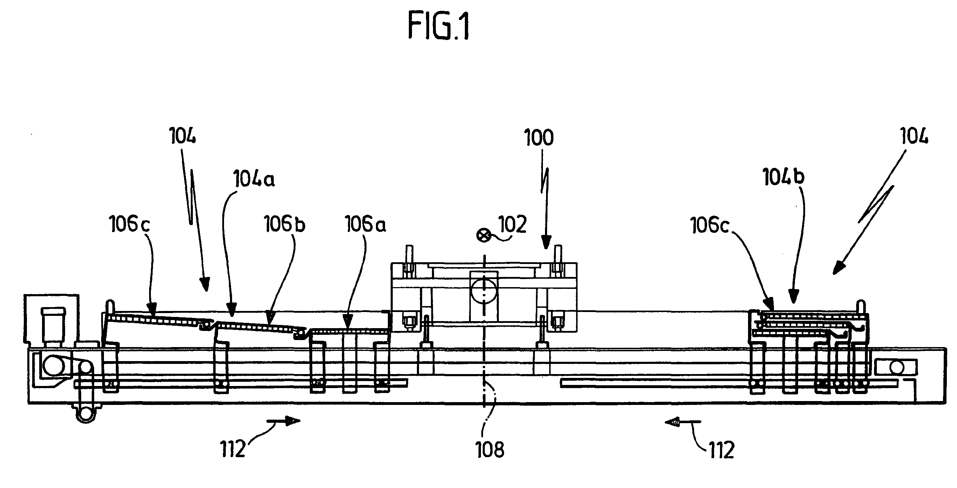

Eine in den Fig. 1 bis 3 in dünnen Linien dargestellte Fördervorrichtung 100 dient dem Transport von (nicht dargestellten) Fahrzeugkarosserien durch eine Automatenzone einer (nicht dargestellten) Spritzkabine, in welcher die Fahrzeugkarosserien mittels Lackierautomaten lackiert werden.

Um die Fördervorrichtung 100 und die Lackierautomaten in der Spritzkabine warten zu können, ist beiderseits der sich in einer Längsrichtung 102 erstreckenden Fördervorrichtung 100 jeweils eine Plattformanordnung 104 angeordnet, die jeweils drei Plattformelemente 106 umfaßt.

Die in Fig. 1 links neben der Fördervorrichtung 100 dargestellte Plattformanordnung 104a befindet sich gerade in der Arbeitsstellung, in welcher die Plattformelemente 106 nebeneinander angeordnet sind und gemeinsam eine bis zur Fördervorrichtung 100 reichende begehbare Plattform bilden.

Das in der Arbeitsstellung der Fördervorrichtung 100 benachbarte Plattformelement wird im folgenden als inneres Plattformelement 106a bezeichnet. Das in der Arbeitsstellung am weitesten von der Förderrichtung 100 entfernte Plattformelement wird im folgenden als äußeres Plattformelement 106c bezeichnet. Das zwischen dem inneren und dem äußeren Plattformelement angeordnete Plattformelement wird im folgenden als mittleres Plattformelement 106b bezeichnet.

Die in Fig. 1 rechts von der Fördervorrichtung 100 dargestellte zweite Plattformanordnung 104b ist bezüglich einer Längsmittelebene 108 symmetrisch zu der ersten Plattformanordnung 104a ausgebildet und angeordnet.

In Fig. 1 befindet sich die zweite Plattformanordnung 104b in der Ruhestellung, in welcher die drei Plattformelemente 106 nicht nebeneinander, sondern übereinander angeordnet sind, so daß in dieser Ruhestellung das innere Plattformelement 106a und das mittlere Plattformelement 106b durch das äußere Plattformelement 106c vor einer Verschmutzung während des Betriebes der Lackierautomaten in der Spritzkabine geschützt sind.

Die Darstellung der Fig. 1 dient jedoch lediglich dem Vergleich von Arbeits- und Ruhestellung der Plattformanordnungen 104; in der Praxis befinden sich stets entweder beide Plattformanordnungen 104 in der Arbeitsstellung oder beide Plattformanordnungen in der Ruhestellung.

Im folgenden wird der Aufbau einer der Plattformanordnungen 104 im einzelnen beschrieben werden:

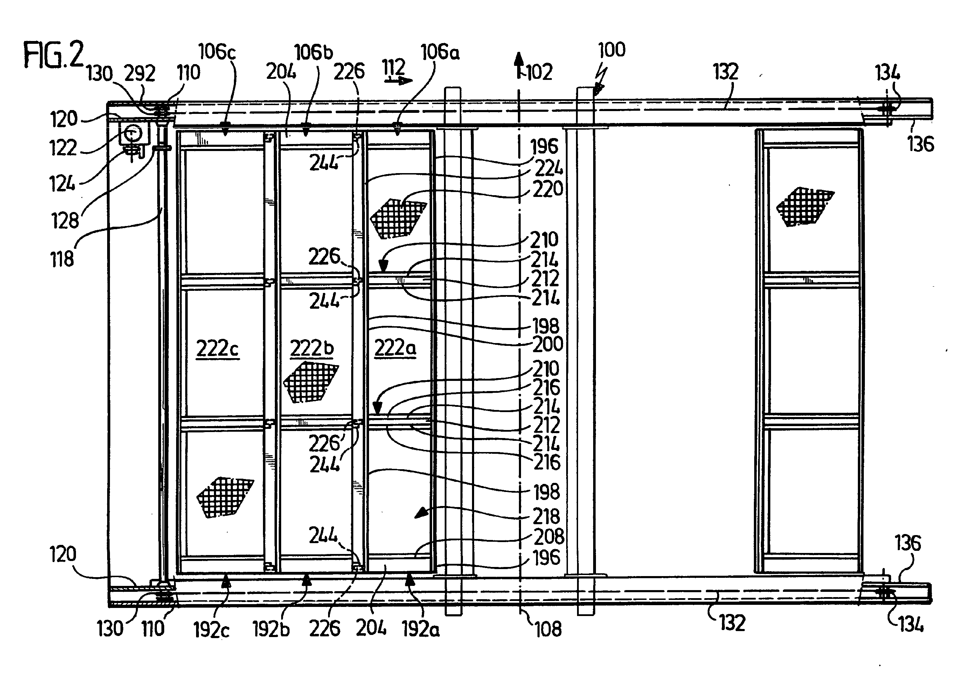

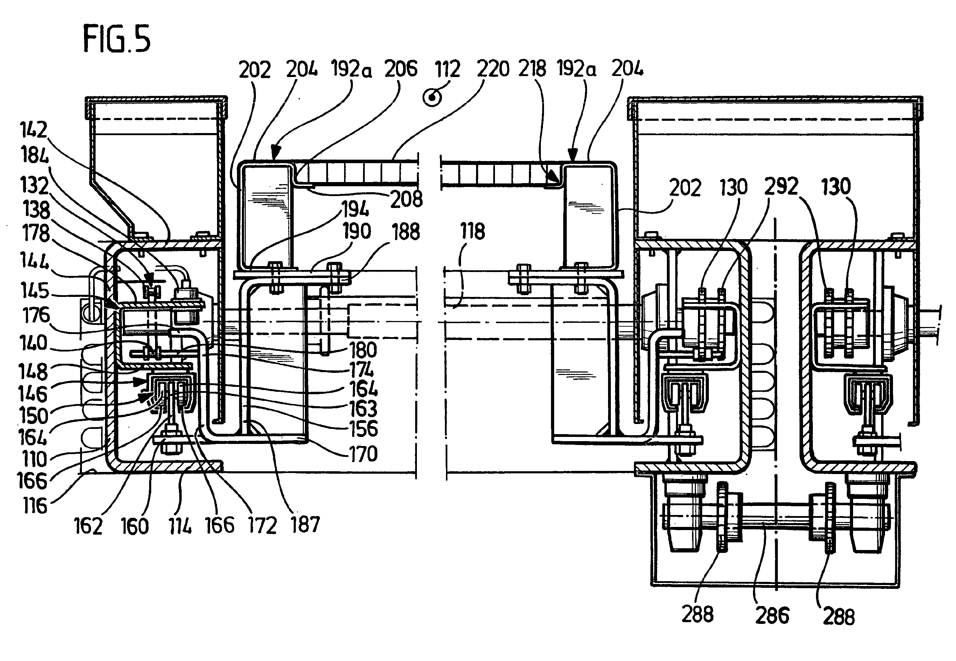

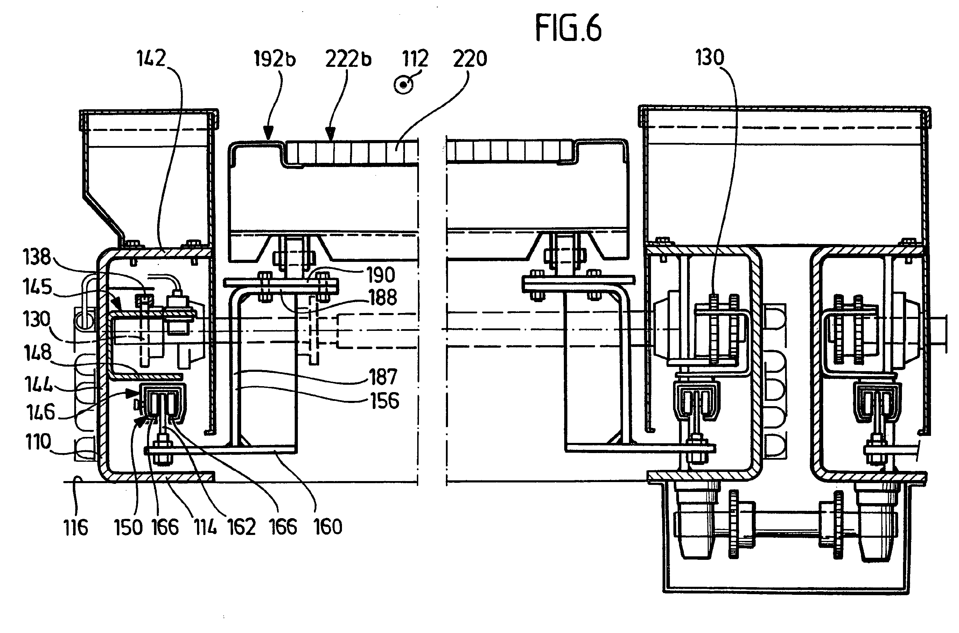

Wie insbesondere aus den Fig. 2 und 5 bis 7 zu ersehen ist, ist die Plattformanordnung 104 an einem in der Längsrichtung 102 vorne liegenden Ende und einem in der Längsrichtung 102 hinten liegenden Ende durch jeweils eine Seitenwange 110 begrenzt, welche sich beide parallel zu einer senkrecht zur Längsrichtung 102 der Fördervorrichtung 100 ausgerichteten horizontalen Ausziehrichtung 112 erstrecken und jeweils einen im wesentlichen U-förmigen Querschnitt aufweisen, wobei die offenen Seiten dieser U-förmigen Querschnitte einander zugewandt sind (siehe Fig. 5 bis 7). Mit ihren unteren vertikalen Schenkeln 114 stützen sich die Seitenwangen 110 an einem ebenen Untergrund 116 ab.

Wie am besten aus der Draufsicht der Fig. 2 zu ersehen ist, erstreckt sich zwischen den der Fördervorrichtung 100 abgewandten Enden der Seitenwangen 110 eine Antriebswelle 118, welche sich über die nahezu gesamte Länge der Plattformanordnung 104 erstreckt und an zwei Stützwänden 120, welche jeweils einer der Seitenwangen 110 benachbart sind, drehbar gelagert ist.

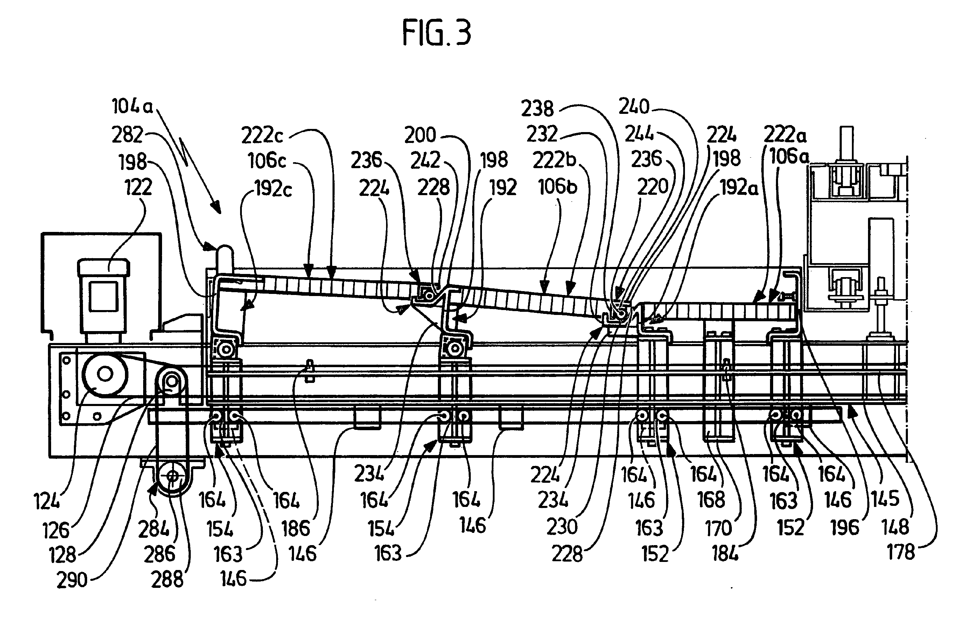

Die Antriebswelle 118 ist von einem Antriebsmotor 122 (siehe Fig. 3) über ein auf der Abtriebswelle des Antriebsmotors 122 angeordnetes Kettenrad 124, eine Kette 126 und ein an der Antriebswelle 118 angeordnetes Kettenrad 128 zu einer Drehbewegung antreibbar.

Zwei jeweils an den Enden der Antriebswelle 118 angeordnete Antriebskettenräder 130 tragen jeweils eine Antriebskette 132, die ferner um jeweils ein Umlenkkettenrad 134 geführt ist, welches in einer Stützwand 136 drehbar gelagert ist.

Die Achsen der Umlenkkettenräder 134 und der Antriebskettenräder 130 liegen auf derselben Höhe, so daß das obere Trum 138 (siehe Fig. 5) und das untere Trum 140 jeder Antriebskette 132 im wesentlichen horizontal verlaufen.

Wie aus Fig. 5 zu ersehen ist, verläuft das obere Trum 138 und das untere Trum 140 jeder Antriebskette 132 zwischen dem unteren horizontalen Schenkel 114 und dem oberen horizontalen Schenkel 142 der jeweiligen Seitenwange 110.

An der Innenseite des vertikalen Stegs 144 jeder Seitenwange 110 ist jeweils eine sich parallel zur Ausziehrichtung 112 erstreckende Halteschiene 145 festgelegt, welche einen U-förmigen Querschnitt aufweist, der zur Innenseite der Seitenwangen 110 hin geöffnet ist.

An der Unterseite des unteren horizontalen Schenkels 148 jeder Halteschiene 145 sind Haltebügel 146 festgelegt, welche einen im wesentlichen C-förmigen, nach unten offenen Querschnitt aufweisen und längs der Ausziehrichtung 112 voneinander beabstandet sind.

Die mehreren, beispielsweise fünf, an derselben Halteschiene 145 festgelegten Haltebügel 146 halten zusammen jeweils eine Führungsschiene 150 mit einem ebenfalls im wesentlichen C-förmigen, nach unten geöffneten Querschnitt, die sich längs der Ausziehrichtung 112 erstreckt.

An jeder der Führungsschienen 150 sind jeweils zwei starre Laufwagen 152 des inneren Plattformelements 106a und jeweils ein Schwenk-Laufwagen 154 des mittleren Plattformelements 106b sowie des äußeren Plattformelements 106c längs der Ausziehrichtung 112 verschieblich geführt.

Wie am besten aus den Fig. 5 bis 7 zu ersehen ist, umfaßt jeder der Laufwagen 152, 154 eine im wesentlichen horizontale Führungsplatte 160, welche sich von dem Tragebügel 156 aus seitlich bis unter die jeweilige Führungsschiene 150 erstreckt.

Von jeder Führungsplatte 160 aus erstreckt sich nach oben in den Innenraum der jeweiligen Führungsschiene 150 hinein ein vertikaler Führungsstab 162, welcher an seinem oberen Ende eine vertikale Halteplatte 163 trägt (siehe Fig. 3), an der jeweils zwei Paare von Führungsrollen 164 drehbar gelagert sind, welche jeweils auf einem unteren horizontalen Führungsschenkel 166 (siehe Fig. 5 bis 7) der Führungsschiene 150 abrollen und somit den jeweiligen Laufwagen 152, 154 an der Führungsschiene 150 längs der Ausziehrichtung 112 führen.

Während die Schwenk-Laufwagen 154 des mittleren Plattformelements 106b und des äußeren Plattformelements 106c sowie die starren Laufwagen 152 des inneren Plattformelements 106a der Führung der Plattformelemente 106 an den Führungsschienen 150 dienen, dient ein Mitnehmer 168, der in der Ausziehrichtung 112 zwischen den beiden starren Führungs-Laufwagen 152 des ersten Plattformelements 106a angeordnet ist, der Kopplung zwischen dem inneren Plattformelement 106a und der Antriebskette 132.

Hierzu ist, wie am besten aus Fig. 5 zu ersehen ist, an der Unterseite des Mitnehmers 168 ein unterer horizontaler Schenkel 170 (siehe Fig. 3) einer im wesentlichen Z-förmig ausgebildeten Verbindungsplatte 172 vorgesehen. Der an den unteren horizontalen Schenkel 170 der Verbindungsplatte 172 angrenzende vertikale Steg 174 erstreckt sich nach oben bis über die Höhe des unteren horizontalen Schenkels 148 der Halteschiene 145 hinaus und trägt an seinem oberen Rand den oberen horizontalen Schenkel 176 der Verbindungsplatte 172, welcher sich zwischen dem unteren horizontalen Schenkel 148 und dem oberen horizontalen Schenkel 178 der Halteschiene 145 in deren Innenraum hinein erstreckt.

An der der Halteschiene 145 zugewandten Außenseite des vertikalen Stegs 174 der Verbindungsplatte 172 ist an derselben ein Verbindungsbolzen 180, beispielsweise durch Verschweißen, festgelegt, welcher von dem vertikalen Steg 174 aus in horizontaler Richtung zu dem unteren Trum 140 der Antriebskette 132 hin vorsteht und an einem Paar von Kettenlaschen der Antriebskette 132 festgelegt ist.

Durch den Verbindungsbolzen 180 und die Verbindungsplatte 172 ist somit eine starre Verbindung zwischen der Antriebskette 132 und dem Mitnehmer 168 hergestellt, so daß sich bei einer Bewegung des unteren Trums 140 der Antriebskette 132 längs der Ausziehrichtung 112 das innere Plattformelement 106a gleichsinnig mitbewegt.

Das obere Trum 138 der Antriebskette 132 verläuft, wie aus Fig. 5 zu ersehen ist, zwischen dem oberen horizontalen Schenkel 178 der Halteschiene 145 einerseits und dem oberen horizontalen Schenkel 142 der Seitenwange 110 andererseits. Zwischen der Halteschiene 145 und der Führungsschiene 150 einerseits und den Laufwagen 152, 154 und dem Mitnehmer 168 andererseits ist ein vertikales Abdeckblech 182 angeordnet.

Wie am besten aus den Fig. 3 und 5 bis 7 zu ersehen ist, sind ferner an dem oberen horizontalen Schenkel 178 der Halteschiene 145 ein innerer Näherungsschalter 184 und ein äußerer Näherungsschalter 186 angeordnet. Die Näherungsschalter 184, 186 sprechen auf die Anwesenheit des oberen horizontalen Schenkels 176 der Verbindungsplatte 172 an dem Mitnehmer 168 im Detektionsbereich des jeweiligen Näherungsschalters an. Der innere Näherungsschalter 184 ist so an der Halteschiene 145 angeordnet, daß der obere horizontale Schenkel 176 des Mitnehmers 168 in den Detektionsbereich dieses Näherungsschalters gelangt, wenn die Plattformanordnung 104a ihre Arbeitsstellung erreicht hat, in welcher das innere Plattformelement 106a vollständig ausgezogen ist. Der innere Näherungsschalter 184 schaltet dann den Antriebsmotor 122 ab, sobald die Arbeitsstellung erreicht ist.

Der äußere Näherungsschalter 186 ist so an der Halteschiene 145 angeordnet, daß der obere horizontale Schenkel 176 an dem Mitnehmer 168 in den Detektionsbereich dieses Näherungsschalters gelangt, wenn sich die Plattformanordnung 104a in ihrer Ruhestellung befindet, in welcher das innere Plattformelement 106a vollständig eingefahren ist. Bei Erreichen dieser Ruhestellung schaltet der äußere Näherungsschalter den Antriebsmotor 122 ab.

Von der Oberseite jeder Führungsplatte 160 eines der Laufwagen 152, 154 und von der Oberseite des unteren horizontalen Schenkels 170 jeden Mitnehmers 168 aus erstreckt sich ein L-förmiger Tragebügel 156 mit einem vertikalen Schenkel 187 und einem oberen horizontalen Schenkel 188 nach oben.

An der Oberseite des oberen horizontalen Schenkels 188 jedes unteren Tragebügels 156 der Laufwagen 152, 154 oder des Mitnehmers 168 ist jeweils eine horizontale Trageplatte 190 mittels geeigneter Befestigungsschrauben und -muttern festgelegt.

Die Trageplatten 190 der starren Laufwagen 152 und der Mitnehmer 168 des inneren Plattformelements 106a tragen gemeinsam einein im wesentlichen rechteckigen Halterahmen 192a des inneren Plattformelements 106a.

Wie aus den Fig. 2, 3 und 5 zu ersehen ist, umfaßt der Halterahmen 192a an seinem unteren Ende horizontale Trageschenkel 194, mit denen der Halterahmen 192a auf den Laufwagen 152, 154 und den Mitnehmern 168 aufliegt, eine vertikale vordere Begrenzungswand 196, welche eine Schutzabdeckung zwischen der Fördervorrichtung 100 und der Plattformanordnung 104a bildet, eine vertikale hintere Begrenzungswand 198, deren oberer Rand eine hintere Begrenzungskante 200 bildet, sowie parallel zur Ausziehrichtung 112 verlaufende vertikale seitliche Begrenzungswände 202, welche die vordere Begrenzungswand 196 und die hintere Begrenzungswand 198 miteinander verbinden.

Wie am besten aus Fig. 5 zu ersehen ist, tragen die seitlichen Begrenzungswände 202 an ihren oberen Rändern zur Innenseite des Halterahmens 192a hin abstehende horizontale Abrollbereiche 204.

An die inneren Ränder der horizontalen Abrollbereiche 204 grenzen sich nach unten erstreckende vertikale Aufnahmerandbereiche 206 an, an deren untere Ränder wiederum zur Innenseite des Halterahmens 192a hin vorstehende horizontale Aufnahmeauflagebereiche 208 angrenzen.

Wie aus Fig. 2 zu ersehen ist, sind die vordere Begrenzungswand 196 und die hintere Begrenzungswand 198 des Halterahmens 192a ferner durch zwei sich parallel zur Ausziehrichtung erstreckende Querstege 210 mit einem jeweils hutförmigen Profil versehen, welches einen mittleren horizontalen Abrollbereich 212 umfaßt, an dessen seitliche Ränder nach unten abstehende vertikale Aufnahmerandbereiche 214 angrenzen, von deren unteren Rändern wiederum jeweils ein horizontaler Aufnahmeauflagebereich 216 seitlich absteht.

Die einander zugewandten Aufnahmeauflagebereiche 216 und Aufnahmerandbereiche 214 der Querstege 210 bilden zusammen mit den von den Querstegen 210 begrenzten Bereichen der vorderen Begrenzungswand 196 und der hinteren Begrenzungswand 198 eine Aufnahme 218 für einen rechteckigen Gitterrost 220, der parallel zur Längsrichtung 102 eine Erstreckung von ungefähr 1 m und parallel zur Ausziehrichtung 112 eine Erstreckung von ungefähr 50 cm aufweist und mit seiner Unterseite auf den Aufnahmeauflagebereichen 216 aufliegt.

In entsprechender Weise bilden die Aufnahmeauflagebereiche 208 und die Aufnahmerandbereiche 206 zusammen mit den jeweils gegenüberliegenden Aufnahmeauflagebereichen 216 und Aufnahmerandbereichen 214 sowie den angrenzenden Bereichen der vorderen Begrenzungswand 196 und der hinteren Begrenzungswand 198 ebenfalls jeweils rechteckige Aufnahmen 218 für jeweils einen rechteckigen Gitterrost 220.

Die Gitterroste 220 sind für Wartungs- und Reinigungszwecke in einfacher Weise nach oben aus den Aufnahmen 218 entnehmbar.

Die Oberseiten der Gitterroste 220 bilden zusammen mit den Abrollbereichen 204 und 212 eine begehbare ebene Teilplattform 222a des inneren Plattformelements 106a, deren hintere Begrenzung durch die hintere Begrenzungskante 200 gebildet wird.

Wie am besten aus Fig. 3 zu ersehen ist, ist an der hinteren Begrenzungswand 196 des Halterahmens 192a ferner eine Einlaufwanne 224 angeordnet, welche in der Arbeitsstellung der Plattformanordnung 104a mehrere, beispielsweise vier, Stützrollen 226 aufnimmt, welche an der Vorderseite des inneren Plattformelements 106b angeordnet sind.

Die Einlaufwanne 224 erstreckt sich senkrecht zur Ausziehrichtung 112 über die gesamte Länge der Teilplattform 222a und weist einen im wesentlichen konstanten Querschnitt auf, der einen Einlaufbereich 228, welcher sich von der hinteren Begrenzungskante 200 aus unter einem Winkel von ungefähr 45° gegen die Oberseite der Teilplattform 222a nach unten erstreckt, einen an den unteren Rand des Einlaufbereichs 228 angrenzenden Stützbereich 230, dessen Oberseite im wesentlichen parallel zu der Oberseite der Teilplattform 222a ausgerichtet ist, und einen an einen hinteren Rand des Stützbereichs 230 angrenzenden Anschlagbereich 232, welcher sich von einem hinteren Rand des Stützbereichs 230 aus im wesentlichen senkrecht zur Oberseite der Teilplattform 222a nach oben erstreckt, umfaßt. Unterhalb der Einlaufwanne 224 sind in der Längsrichtung 102 voneinander beabstandete Stützbleche 234 angeordnet, die einerseits an der Unterseite des Stützbereichs 230 und andererseits an der Rückseite der hinteren Begrenzungswand 198 festgelegt sind und so der Abstützung der Einlaufwanne 224 dienen.

Das mittlere Plattformelement 106b umfaßt ebenso wie das innere Plattformelement 106a einen Halterahmen 192b, welcher der Aufnahme von drei Gitterrosten 220 dient. Der Halterahmen 192b ist jedoch nicht starr an Vorder- und Rückseite mit Führungs-Laufwagen verbunden, wie der Halterahmen 192a des inneren Plattformelements 106a, sondern nur an seiner hinteren Seite schwenkbar an den beiden Schwenk-Laufwagen 154 gehalten. Einzelheiten dieses Schwenkmechanismus werden nachstehend im Zusammenhang mit dem äußeren Plattformelement 106c erläutert werden.

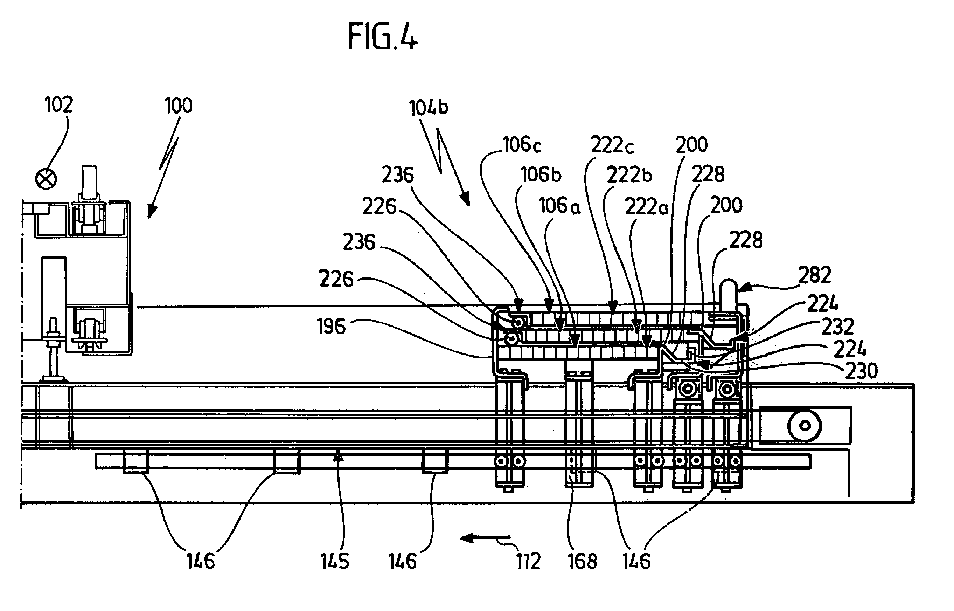

Die hintere Begrenzungswand 198 des Halterahmens 192b des mittleren Plattformelements 106b ist höher ausgebildet als die hintere Begrenzungswand 198 des Halterahmens 192a des inneren Plattformelements 106a, so daß die Teilplattform 222a des inneren Plattformelements 106a in der Ruhestellung der Plattformanordnung 104a unter die Teilplattform 222b des mittleren Plattformelements 106b geschoben werden kann (siehe Fig. 4).

Die vordere Begrenzung des Halterahmens 192b des mittleren Plattformelements 106b wird durch ein rechtwinkliges Winkelprofil 236 (siehe Fig. 3) gebildet, welches sich in der Längsrichtung 102 über die gesamte Länge der Teilplattform 222b erstreckt und einen vertikalen Schenkel 238 sowie einen horizontalen Schenkel 240 umfaßt, dessen Oberseite bündig mit der Oberseite der Gitterroste 220 angeordnet ist und einen Teil der begehbaren Teilplattform 222b bildet.

Der vordere Rand des horizontalen Schenkels 240 des Winkelprofils 236 bildet eine vordere Begrenzungskante 242 der Teilplattform 222b.

An der Unterseite des horizontalen Schenkels 240 und an der Vorderseite des vertikalen Schenkels 238 des Winkelprofils 236 sind mehrere, beispielsweise vier, Lagerböcke 244 festgelegt, an denen jeweils eine der Stützrollen 226 des mittleren Plattformelements 106b drehbar gelagert ist. Die Stützrollen 226 sind in der Längsrichtung 102 voneinander beabstandet und so angeordnet, daß sie beim Einfahren der Plattformanordnung 104a in deren Ruhestellung auf den Abrollbereichen 204, 212 der Teilplattform 222a des inneren Plattformelements 106a abrollen.

Von der hinteren Begrenzungskante 200 der Teilplattform 222b erstreckt sich, ebenso wie bei der Teilplattform 222a, der Einlaufbereich 228 einer Einlaufwanne 224 nach unten. Die Einlaufwanne 224 ist mittels Stützblechen 234 an der hinteren Begrenzungswand 198 des Halterahmens 192b des mittleren Plattformelements 106b abgestützt und dient dazu, in der Arbeitsstellung der Plattformanordnung 104a die Stützrollen 226 an der Vorderseite der Teilplattform 222c des äußeren Plattformelements 106c aufzunehmen.

Das äußere Plattformelement 106c umfaßt ebenso wie das mittlere Plattformelement 106b einen Halterahmen 192c, der schwenkbar an den Schwenk-Laufwagen 154 angeordnet ist.

Die hintere Begrenzungswand 198 ist bei dem Halterahmen 192c höher ausgebildet als bei dem Halterahmen 192b des mittleren Plattformelements 106b, so daß die Teilplattform 222b in der Ruhestellung der Plattformanordnung 104a unter die Teilplattform 222c des äußeren Plattformelements 106c geschoben werden kann (siehe Fig. 4).

Die Vorderseite der Teilplattform 222c ist in derselben Weise wie bei der Teilplattform 222b mit einem Winkelprofil 236 versehen, dessen Vorderkante die vordere Begrenzungskante 242 der Teilplattform 222c bildet.

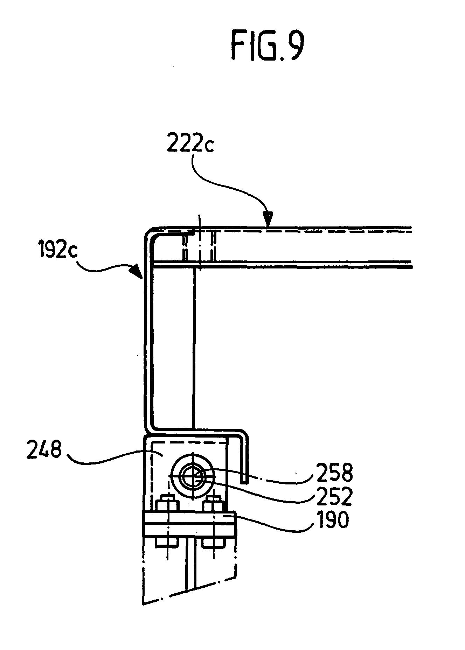

Der Schwenkmechanismus, durch welchen der Halterahmen 192c an jeweils einem der Schwenk-Laufwagen 154 schwenkbar gehalten ist, wird nachstehend unter Bezugnahme auf die Fig. 9 bis 11 im einzelnen erläutert.

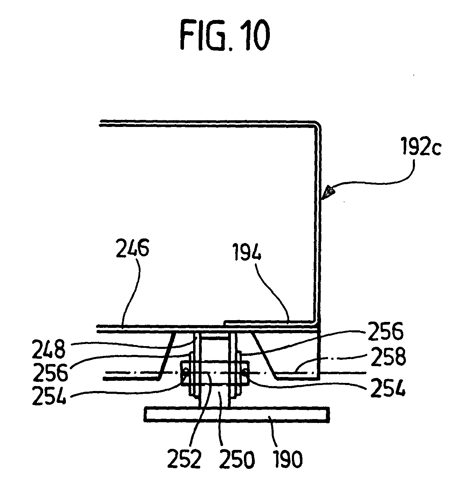

Wie am besten aus Fig. 10 zu ersehen ist, ist die Unterseite des horizontalen Tragschenkels 194 des Halterahmens 192c an der Oberseite eines Stegs 246 festgelegt, welcher sich in der Längsrichtung 102 über die gesamte Breite der Teilplattform 222c erstreckt.

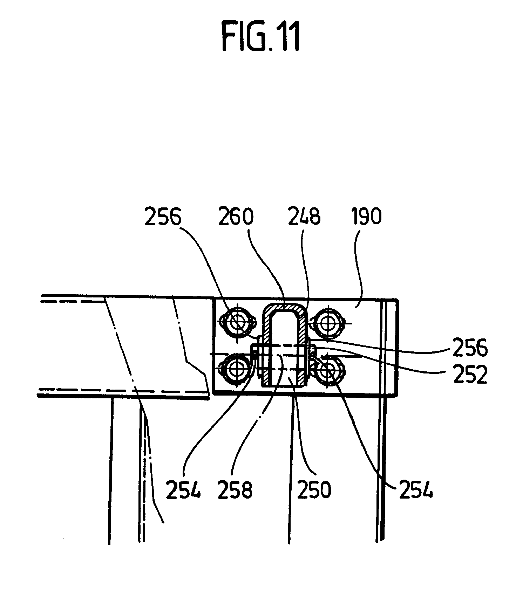

An der Unterseite des Stegs 246 ist ein Bügel 248 mit U-förmigem Querschnitt (siehe Fig. 11) festgelegt, welcher sich zur Vorderseite des äußeren Plattformelements 106c hin öffnet. Der Bügel 248 umgreift einen Lagerblock 250, welcher sich von der Oberseite einer horizontalen Tragplatte 190 aus nach oben erstreckt.

Ein zylindrischer Gelenkbolzen 252 durchsetzt ein horizontales Durchgangsloch in dem Lagerblock 250 und mit demselben fluchtende Durchgangslöcher in den beiden Schenkeln des Bügels 248 und ist durch radial aus dem Gelenkbolzen 252 vorstehende Arretierstifte 254 gegen ein Herausfallen aus diesen Durchgangslöchern gesichert. Das axiale Spiel des Gelenkbolzens 252 wird durch Unterlegscheiben 256 vermindert.

Mittels des vorstehend beschriebenen Schwenkmechanismus ist der Halterahmen 192c aus seiner horizontalen Ruhelage um die Achse 258 des Gelenkbolzens 252 nach vorne (das heißt in der Blickrichtung der Fig. 9 im Uhrzeigersinn) schwenkbar. Eine Verschwenkung des Halterahmens 192c in die Gegenrichtung ist hingegen nicht möglich, da der Steg 260 des Bügels 248 an der Rückseite des Lagerblocks 250 anschlägt und somit ein Verschwenken des Halterahmens 192c nach hinten verhindert.

Der Schwenkmechanismus, mittels dessen der Halterahmen 192b des mittleren Plattformelements 106b schwenkbar an den Schwenk-Laufwagen 154 gehalten ist, ist genauso aufgebaut wie der vorstehend beschriebene Schwenkmechanismus.

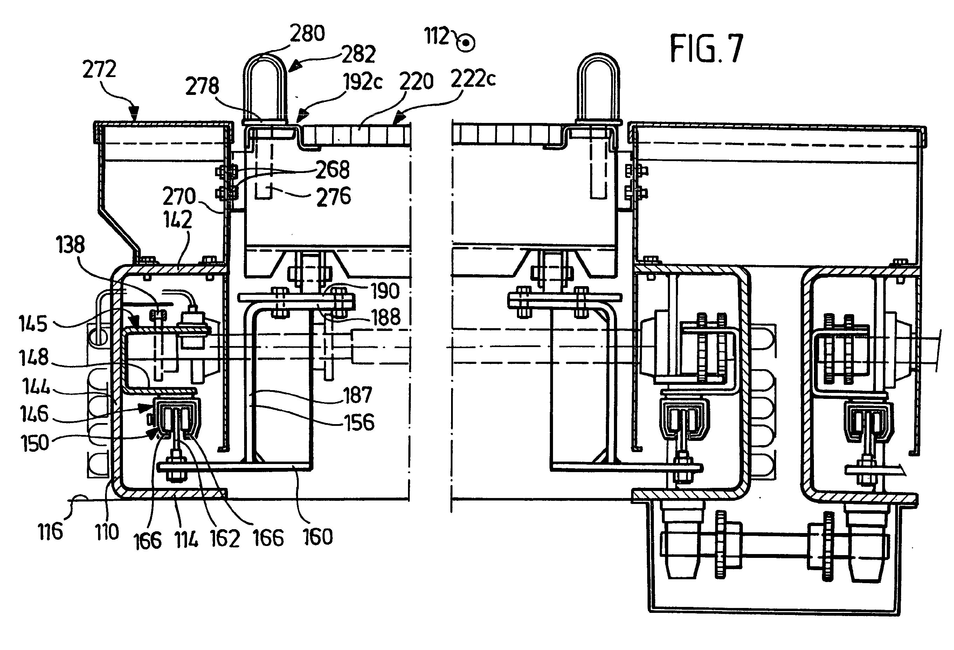

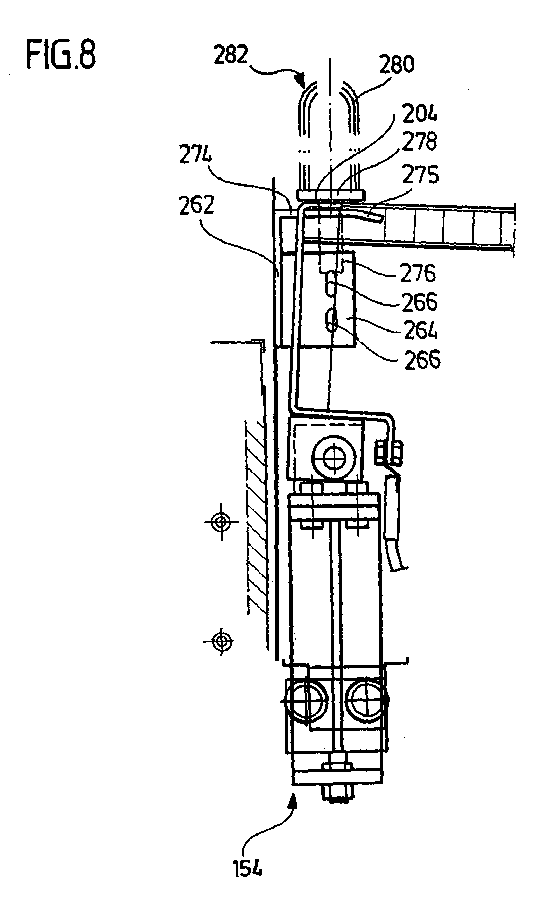

Um zu verhindern, daß das äußere Plattformelement 106c beim Ausziehen des inneren Plattformelements 106a längs der Ausziehrichtung 112 mitbewegt wird, ist ferner ein Haltewinkel 262 vorgesehen (siehe Fig. 8), welcher über eine Halteplatte 264 und mittels Langlöcher 266 in der Halteplatte 264 durchsetzender Befestigungsschrauben 268 (siehe Fig. 7) an einer Seitenwand 270 eines als ganzes mit 272 bezeichneten Aufbaus festgelegt ist, welcher von der Seitenwange 110 getragen wird (siehe Fig. 5).

Wie am besten aus Fig. 8 zu ersehen ist, weist der Haltewinkel 262 eine obere horizontale Auflageplatte 274 auf, deren Vorderseite 275 nach unten abgewinkelt ist, um das Verschwenken der Teilplattform 222c zu ermöglichen.

In der Auflageplatte 274 ist ein Durchgangsloch vorgesehen, welches annähernd mit einem Durchgangsloch in dem horizontalen Abrollbereich 204 des Halterahmens 192c des äußeren Plattformelements 106c fluchtet, so daß ein im wesentlichen zylindrischer Haltestift 276 in vertikaler Richtung durch die beiden Durchgangslöcher hindurchgesteckt werden kann, um das äußere Plattformelement 106c an dem Haltewinkel 262 zu arretieren.

Der Haltestift 276 ist an der Unterseite einer Grundplatte 278 festgelegt, die an ihrer Oberseite einen bogenförmig gekrümmten Griff 280 trägt, dessen beide Enden an der Grundplatte 278 festgelegt sind.

Der Haltestift 276, die Grundplatte 278 und der Griff 280 bilden zusammen einen Stecker 282, der zum Arretieren des äußeren Plattformelements 106c an dem Haltewinkel 262 dienen kann.

Mittels des Steckers 282 können jedoch auch die drei Plattformelemente 106a, 106b und 106c relativ zueinander fixiert werden, um diese Plattformelemente zusammen als Paket zu der Fördervorrichtung 100 hinzuziehen, damit der Bereich der Spritzkabine gereinigt werden kann, über welchem die Plattformelemente in der Ruhestellung der Plattformanordnung 104a angeordnet sind.

Zu diesem Zweck weisen die horizontalen Abrollbereiche 204 der Halterahmen 192a, 192b und 192c jeweils ungefähr mittige Durchgangslöcher auf, welche in der Ruhestellung der Plattformanordnung 104a im wesentlichen miteinander fluchten, so daß der Stecker 282 mit dem Haltestift 276 voran durch die Durchgangslöcher aller drei Plattformelemente hindurchgesteckt werden kann, wodurch die Plattformelemente relativ zueinander fixiert sind und beim Ausziehen des inneren Plattformelements 106a das mittlere Plattformelement 106b und das äußere Plattformelement 106c vom inneren Plattformelement 106a mitgenommen werden.

Die auf der anderen Seite der Fördervorrichtung 100 angeordnete Plattformanordnung 104b ist, wie bereits ausgeführt, bezüglich der Längsmittelebene 108 im wesentlichen symmetrisch zu der Plattformanordnung 104a ausgebildet und angeordnet. Die Plattformanordnung 104b weist jedoch keinen eigenen Antriebsmotor auf; vielmehr werden die Mitnehmer 168 des inneren Plattformelements 106a der Plattformanordnung 104b synchron zu den Mitnehmern 168 der Plattformanordnung 104a von der gemeinsamen Antriebskette 132 mitbewegt.

Da die Ausziehrichtung der Plattformanordnung 104b der Ausziehrichtung der Plattformanordnung 104a entgegengesetzt gerichtet ist, sind die Verbindungsbolzen 180 der Mitnehmer 168 der Plattformanordnung 104b jedoch nicht mit dem unteren Trum 140 der Antriebskette 132, sondern statt dessen mit deren oberem Trum 138 verbunden. Da sich das obere Trum 138 und das untere Trum 140 der Antriebskette 132 stets entgegengesetzt zueinander bewegen, ist somit gewährleistet, daß beim Ausziehen des inneren Plattformelements 106a der Plattformanordnung 104a in die Arbeitsstellung auch das innere Plattformelement 106a der Plattformanordnung 104b zur Fördervorrichtung 100 hin ausgezogen wird, und daß beim Einfahren des inneren Plattformelements 106a der Plattformanordnung 104a in die Ruhestellung auch das innere Plattformelement 106a der Plattformanordnung 104b in die Ruhestellung bewegt wird.

Da die Plattformanordnungen 104a und 104b stets synchron bewegt werden, ist es nicht erforderlich, auch an den Halteschienen 145 der zweiten Plattformanordnung 104b Näherungsschalter vorzusehen, da der Antriebsmotor 122 mittels der Näherungsschalter 184, 186 der ersten Plattformanordnung 104a gesteuert wird.

In der Längsrichtung 102 kann sich eine weitere Plattformanordnung an die erste Plattformanordnung 104a und eine weitere Plattformanordnung an die zweite Plattformanordnung 104b anschließen.

Die gemeinsame Antriebswelle solcher zusätzlichen Plattformanordnungen können mittels eines Übertriebs ebenfalls durch den Antriebsmotor 122 der Plattformanordnungen 104a, 104b angetrieben werden. Ein solcher, in Fig. 3 mit 284 bezeichneter Übertrieb umfaßt eine unterhalb der Antriebswelle 118 angeordnete Übertriebswelle 286, auf welcher ein Kettenrad 288 angeordnet ist, welches mittels einer Übertriebskette 290 von einem Übertriebskettenrad 292, welches an der Antriebswelle 118 benachbart zu einem der Antriebskettenräder 130 angeordnet ist (siehe Fig. 2), antreibbar ist.

Die vorstehend beschriebenen Plattformanordnungen funktionieren wie folgt:

Während des Betriebs der Spritzkabine, in welcher die durch die Spritzkabine mittels der Fördervorrichtung 100 geförderten Fahrzeugkarosserien lackiert werden, befinden sich die Plattformanordnungen 104a, 104b beide in der in Fig. 4 dargestellten Ruhestellung, in welcher die Teilplattformen 222a, 222b und 222c übereinander angeordnet sind. Dabei stützen sich die Stützrollen 226 der inneren Plattformelemente 106b an den Abrollbereichen 204, 212 der Teilplattformen 22a der inneren Plattformelemente 106a ab, so daß die Teilplattformen 222b der mittleren Plattformelemente 106b im wesentlichen horizontal ausgerichtet sind.

In entsprechender Weise stützen sich die Stützrollen 226 der äußeren Plattformelemente 106c an den Abrollbereichen 204, 212 der Teilplattformen 222b der mittleren Plattformelemente 106b ab, so daß die Teilplattformen 222c der äußeren Plattformelemente 106c im wesentlichen horizontal ausgerichtet sind.

Die vorderen Begrenzungswände 196 der Halterahmen 192a der inneren Plattformelemente 106a überdecken dabei die Vorderseiten der Teilplattformen 222a, 222b und 222c vollständig, so daß die Stützrollen 226 vor dem beim Lackieren der Fahrzeugkarosserien erzeugten Lacknebel geschützt sind und somit nicht verkleben und drehbar bleiben.

Soll die Spritzkabine gewartet oder gereinigt werden, so wird der Antriebsmotor 122 in Betrieb genommen, um die Antriebsketten 132 in eine Umlaufbewegung zu versetzen, und zwar derart, daß sich (in der Blickrichtung der Fig. 3 und 4 gesehen) das obere Trum 138 jeder Antriebskette 132 nach rechts und das untere Trum 140 jeder Antriebskette 132 nach links bewegt.

Dadurch werden die Mitnehmer 168 so bewegt, daß die inneren Plattformelemente 106a beider Plattformanordnungen 104a, 104b längs der jeweiligen Ausziehrichtung 112 auf die Fördervorrichtung 100 zu bewegt werden. Bei dieser Ausziehbewegung der inneren Plattformelemente 106a rollen die Stützrollen 226 auf den Abrollbereichen 204, 212 der Teilplattformen 222a ab, bis sie die hinteren Begrenzungskanten 200 der Teilplattformen 222a erreichen. Anschließend laufen die Stützrollen 226 längs der Einlaufbereiche 228 der Einlaufwannen 224 am hinteren Ende der inneren Plattformelemente 106a nach unten, bis die Stützrollen 226 die Stützbereiche 230 erreichen und die Winkelprofile 236 an den Anschlagbereichen 232 der Einlaufwannen 224 anschlagen. Bei dieser Abwärtsbewegung der Stützrollen 226 werden die Teilplattformen 222b der mittleren Plattformelemente 106b um die Schwenkachsen 258 nach unten verschwenkt, so daß die Teilplattformen 222b die in Fig. 3 dargestellte leicht geneigte Stellung einnehmen.

Sobald die Winkelprofile 236 der mittleren Plattformelemente 106b an den Anschlagbereichen 232 der Einlaufwannen 224 der inneren Plattformelemente 106a anschlagen, werden die an den Schwenkkonsolen 154 geführten mittleren Plattformelemente 106b mit den inneren Plattformelementen 106a längs der Ausziehrichtung 112 mitbewegt.

Dabei rollen die Stützrollen 226 der äußeren Plattformelemente 106c auf den Abrollbereichen 204, 212 der mittleren Teilplattformen 222b ab, bis die Stützrollen 226 die hinteren Begrenzungskanten 200 der Teilplattformen 222b erreichen. Die Schwenk-Laufwagen 154 der äußeren Plattformelemente 106a bewegen sich dabei nicht längs der Ausziehrichtung 112 mit, da die äußeren Plattformelemente 106c mittels der Stecker 282 an den Haltewinkeln 262 arretiert sind.

Nach Passieren der hinteren Begrenzungskante 200 der Teilplattform 222b laufen die Stützrollen der äußeren Plattformelemente 106c längs der Einlaufbereiche 228 der Einlaufwannen 224 der mittleren Plattformelemente 106b nach unten, wobei sich die Teilplattformen 222c der äußeren Plattformelemente 106c um deren Schwenkachsen 258 so verschwenken, daß sie die in Fig. 3 dargestellte geneigte Stellung einnehmen.

Bevor die Winkelprofile 236 an der Vorderseite der Teilplattformen 222c die Anschlagbereiche 232 der Einlaufwannen 224 der mittleren Plattformelemente 106b erreichen, gelangen die oberen horizontalen Schenkel 176 der Verbindungsplatten 172 an den Mitnehmern 168 der inneren Plattformelemente 106a in den Bereich der inneren Näherungsschalter 184, worauf der Antriebsmotor 122 sofort abgeschaltet wird.

Nunmehr befinden sich die Plattformanordnungen 104a, 104b in der in Fig. 3 dargestellten Arbeitsstellung, in welcher die Teilplattformen 222a, 222b und 22c nebeneinander angeordnet sind und eine begehbare Gesamtplattform bilden. Wie aus Fig. 3 zu ersehen ist, befinden sich die vorderen Begrenzungskanten 242 der Teilplattformen 222b und 222c im wesentlichen auf derselben Höhe wie die hinteren Begrenzungskanten 200 der Teilplattformen 222a bzw. 222b, so daß die Gesamtplattform keine Stufen aufweist, an denen eine die Gesamtplattform begehende Person hängen bleiben und sich verletzen könnte.

Außerdem sind auch die horizontalen Abstände zwischen den vorderen Begrenzungskanten 242 der Teilplattformen 222b und 222c einerseits und den hinteren Begrenzungskanten 200 der Teilplattformen 222a bzw. 222b so klein, daß zwischen den Teilplattformen nur ein schmaler Spalt entsteht, der zu klein ist, als daß die Schuhe einer die Gesamtplattform begehenden Person hineingeraten könnten.

Die Neigung der Teilplattformen 222b und 222c beträgt weniger als 10° gegenüber der Horizontalen und ist somit so gering, daß ein Abrutschen einer die Gesamtplattform begehenden Person auf den geneigten Gitterrosten 220 auch dann im wesentlichen ausgeschlossen ist, wenn diese Gitterroste stark eingefettet und dadurch rutschig sind.

Nach erfolgten Wartungs- und/oder Reinigungsarbeiten in der Spritzkabine werden die Plattformanordnungen 104a, 104b wieder in die Ruhestellung zurückbewegt, indem der Antriebsmotor 122 mit umgekehrter Drehrichtung wieder in Betrieb genommen wird. Dadurch werden die inneren Plattformelemente 106a entgegen den jeweiligen Ausziehrichtungen 112 von der Förderrichtung 100 wegbewegt. Dabei laufen die Stützrollen 226 der inneren Plattformelemente 106b längs der Einlaufbereiche 228 der Einlaufwannen 224 an der Rückseite der inneren Plattformelemente 106a nach oben, wodurch die Teilplattformen 222b in ihre horizontale Ausgangslage zurückgeschwenkt werden.

Anschließend rollen die Stützrollen 226 der mittleren Plattformelemente 106b auf den Abrollbereichen 204, 212 der Teilplattformen 222a nach vorne, bis die vorderen Begrenzungskanten 242 der Teilplattformen 222b an den vorderen Begrenzungswänden 196 der inneren Plattformelemente 106a anschlagen.

Spätestens ab diesem Zeitpunkt bewegen sich die Stützrollen 226 der äußeren Plattformelemente 106c relativ zu den mittleren Plattformelementen 106b und laufen längs der Einlaufbereiche 228 der Einlaufwannen 224 an der Rückseite der mittleren Plattformelemente 106b nach oben, wodurch die Teilplattformen 222c der äußeren Plattformelemente 106c in ihre horizontale Ausgangslage zurückgeschwenkt werden. Anschließend rollen die Stützrollen 226 der äußeren Plattformelemente 106c auf den Abrollbereichen 204, 212 der Teilplattformen 222b ab, bis die oberen horizontalen Schenkel 176 der Verbindungsplatten 172 an den Mitnehmern 168 der inneren Plattformelemente 106a in den Bereich der äußeren Näherungsschalter 186 gelangen, worauf der Antriebsmotor 122 sofort abgeschaltet wird.

Nunmehr befinden sich die Plattformanordnungen 104a, 104b wieder in der in Fig. 4 dargestellten Ruhestellung, in welcher die vertikalen Abstände zwischen den vorderen Begrenzungskanten 242 der Teilplattformen 222b und 222c einerseits und den hinteren Begrenzungskanten 200 der Teilplattformen 222a bzw. 222b größer sind als die Dicke der Teilplattformen 222b bzw. 222c.

Soll der Bereich, welcher in der Ruhestellung der Plattformanordnungen 104a, 104b von den Plattformelementen 106a, 106b, 106c überdeckt wird, gereinigt werden, so werden die inneren Plattformelemente 106a mittels des Antriebsmotors 122 in der vorstehend beschriebenen Weise auf die Fördervorrichtung 100 zu bewegt; vor dem Inbetriebsetzen des Antriebsmotors 122 werden jedoch die Stecker 282 von den Haltewinkeln 262 gelöst und statt dessen in die Durchgangslöcher im mittleren Bereich der Abrollbereiche 204 der Teilplattformen 222a, 222b und 222c eingeführt, um eine Relativbewegung der Plattformelemente 106a, 106b und 106c zu unterbinden. Dadurch werden die Plattformelemente gemeinsam zu der Fördervorrichtung 100 hin bewegt, und der von den Plattformanordnungen 104a, 104b in der Ruhestellung überdeckte Bereich wird für Reinigungszwecke frei zugänglich.

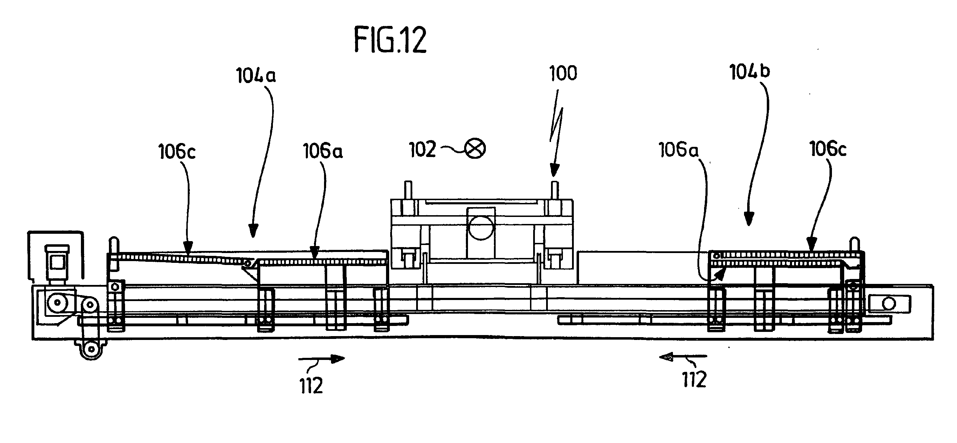

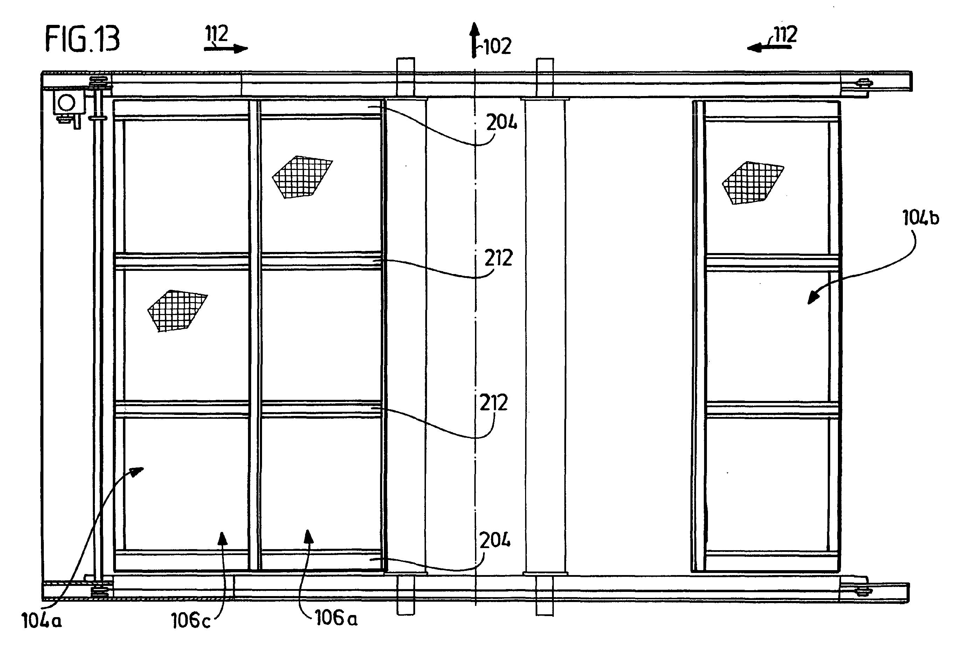

Die in den Fig. 12 bis 15 dargestellten Plattformanordnungen gemäß einer zweiten Ausführungsform unterscheiden sich von den Plattformanordnungen gemäß der vorstehend beschriebenen ersten Ausführungsform lediglich dadurch, daß die Plattformanordnungen der zweiten Ausführungsform jeweils nur zwei Plattformelemente, nämlich ein inneres Plattformelement 106a und ein äußeren Plattformelement 106c umfassen und das mittlere Plattformelement 106b entfällt.

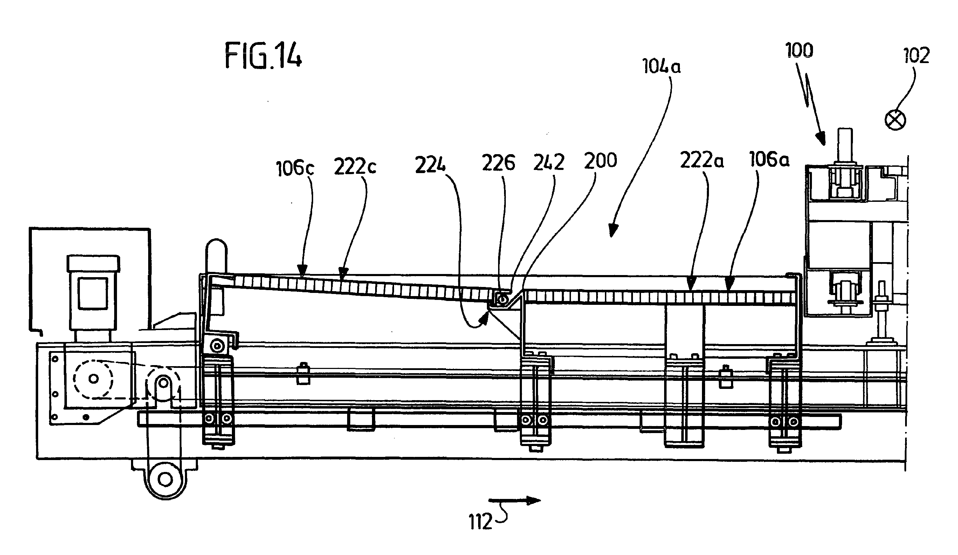

In der in Fig. 14 dargestellten Arbeitsstellung sind somit die Stützrollen 226 der äußeren Plattformelemente 106c in den Einlaufwannen 224 an der Rückseite der inneren Plattformelemente 106a aufgenommen, wobei sich die vordere Begrenzungskante 242 der Teilplattform 222c im wesentlichen auf derselben Höhe befindet wie die hintere Begrenzungskante 200 der inneren Plattformelemente 106a.

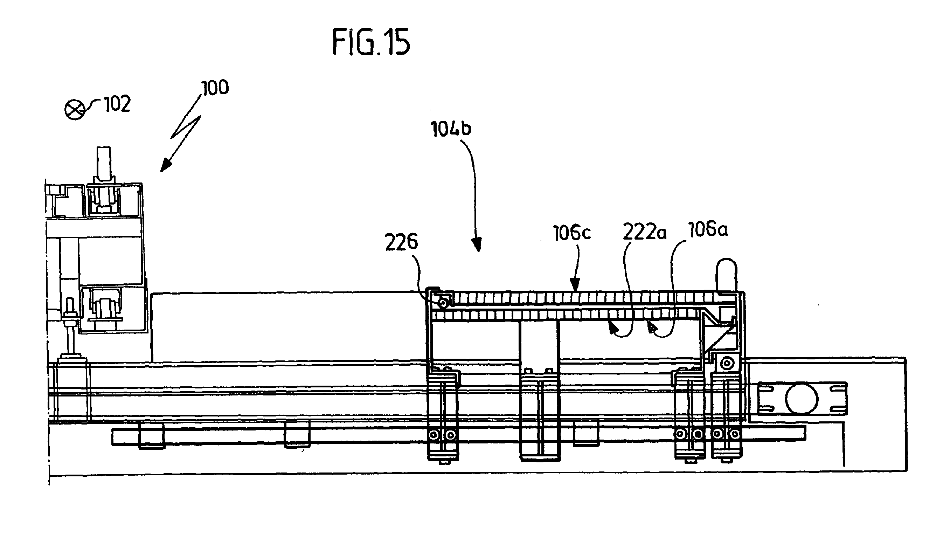

In der in Fig. 15 dargestellten Ruhestellung stützen sich die Stützrollen 226 der äußeren Plattformelemente 106c direkt auf den Abrollbereichen 204, 212 der Teilplattformen 222a der inneren Plattformelemente 106a ab.

Im übrigen stimmen die Plattformanordnungen 104a, 104b hinsichtlic:h Aufbau und Funktion mit den Plattformanordnungen 104a, 104b der ersten Ausführungsform überein, auf deren vorstehende Beschreibung insoweit Bezug genommen wird.

## Patentansprüche

1. Begehbare Plattformanordnung, umfassend mindestens eine erste Teilplattform (222a), die aus einer Ruhestellung längs einer Ausziehrichtung (112) in eine Arbeitsstellung bewegbar ist, und eine zweite Teilplattform (222b; 222c), die in der Arbeitsstellung hinter der ersten Teilplattform (222a) angeordnet ist,
wobei eine hintere Begrenzungskante (200) der ersten Teilplattform und eine vordere Begrenzungskante (242) der zweiten Teilplattform in der Ruhestellung vertikal voneinander beabstandet sind,
**dadurch gekennzeichnet, daß**
die Plattformanordnung (104a, 104b) Führungsmittel umfaßt, durch welche die Relativbewegung zwischen der ersten Teilplattform (222a) und der zweiten Teilplattform (222b; 222c) beim Bewegen der ersten Teilplattform in die Arbeitsstellung so geführt wird, daß der vertikale Abstand zwischen der hinteren Begrenzungskante (200) der ersten Teilplattform und der vorderen Begrenzungskante (242) der zweiten Teilplattform in der Arbeitsstellung kleiner ist als in der Ruhestellung.

2. Begehbare Plattformanordnung nach Anspruch 1, **dadurch gekennzeichnet, daß** die Führungsmittel so ausgebildet sind, daß der vertikale Abstand zwischen der hinteren Begrenzungskante (200) der ersten Teilplattform (222a) und der vorderen Begrenzungskante (242) der zweiten Teilplattform (222b; 222c) in der Arbeitsstellung kleiner ist als die Dicke der zweiten Teilplattform (222b; 222c).

3. Begehbare Plattformanordnung nach einem der Ansprüche 1 oder 2, **dadurch gekennzeichnet, daß** die Führungsmittel so ausgebildet sind, daß der vertikale Abstand zwischen der hinteren Begrenzungskante (200) der ersten Teilplattform (222a) und der vorderen Begrenzungskante (242) der zweiten Teilplattform (222b; 222c) in der Arbeitsstellung im wesentlichen Null ist.

4. Begehbare Plattformanordnung nach einem der Ansprüche 1 bis 3, **dadurch gekennzeichnet, daß** die Führungsmittel so ausgebildet sind, daß die vordere Begrenzungskante (242) der zweiten Teilplattform (222b; 222c) beim Bewegen der ersten Teilplattform (222a) in die Arbeitsstellung abgesenkt wird.

5. Begehbare Plattformanordnung nach einem der Ansprüche 1 bis 4, **dadurch gekennzeichnet, daß** die Führungsmittel mindestens ein an der einen Teilplattform (222a) angeordnetes erstes Führungselement und ein an der jeweils anderen Teilplattform (222b; 222c) angeordnetes zweites Führungselement umfassen.

6. Begehbare Plattformanordnung nach Anspruch 5, **dadurch gekennzeichnet, daß** das erste Führungselement als Führungsbahn (204, 212, 228, 230) ausgebildet ist, längs welcher das zweite Führungselement geführt wird.

7. Begehbare Plattformanordnung nach Anspruch 6, **dadurch gekennzeichnet, daß** die Führungsbahn einen im wesentlichen ebenen Anfangsabschnitt (204, 212) und einen quer zu dem Anfangsabschnitt gerichteten Ablenkabschnitt (228) umfaßt.

8. Begehbare Plattformanordnung nach Anspruch 7, **dadurch gekennzeichnet, daß** der Ablenkabschnitt (228) um einen Winkel von ungefähr 20° bis ungefähr 60°, vorzugsweise um einen Winkel von ungefähr 40° bis ungefähr 50°, gegenüber dem ebenen Anfangsabschnitt (204, 212) geneigt ist.

9. Begehbare Plattformanordnung nach einem der Ansprüche 6 bis 8, **dadurch gekennzeichnet, daß** die Führungsbahn einen Anschlagbereich (232) zur Begrenzung der Bewegung des zweiten Führungselements relativ zu der Führungsbahn umfaßt.

10. Begehbare Plattformanordnung nach einem der Ansprüche 5 bis 9, **dadurch gekennzeichnet, daß** das erste Führungselement einen Aufnahmebereich (230) zur Aufnahme des zweiten Führungselements in der Arbeitsstellung umfaßt.

11. Begehbare Plattformanordnung nach einem der Ansprüche 5 bis 10, **dadurch gekennzeichnet, daß** das zweite Führungselement mindestens eine Rolle (226), vorzugsweise mindestens zwei Rollen (226), umfaßt.

12. Begehbare Plattformanordnung nach einem der Ansprüche 1 bis 11, **dadurch gekennzeichnet, daß** die erste Teilplattform und/oder die zweite Teilplattform (222b; 222c) um eine im wesentlichen horizontale Schwenkachse (258) schwenkbar ist.

13. Begehbare Plattformanordnung nach einem der Ansprüche 1 bis 12, **dadurch gekennzeichnet, daß** die Teilplattformen (222a, 222b; 222a, 222c) jeweils einen Halterahmen (192a, 192b, 192c) zur Aufnahme mindestens eines Gitterrostes (220) umfassen.

14. Begehbare Plattformanordnung nach einem der Ansprüche 1 bis 13, **dadurch gekennzeichnet, daß** die Plattformanordnung (104a, 104b) mindestens eine dritte Teilplattform (222c) umfaßt, die in der Arbeitsstellung hinter der zweiten Teilplattform (222b) angeordnet ist,
wobei eine hintere Begrenzungskante (200) der zweiten Teilplattform (222b) und eine vordere Begrenzungskante (242) der dritten Teilplattform (222c) in der Ruhestellung vertikal voneinander beabstandet sind und
die Plattformanordnung (104a, 104b) Führungsmittel umfaßt, durch welche die Relativbewegung zwischen der zweiten Teilplattform (222b) und der dritten Teilplattform (222c) beim Bewegen der zweiten Teilplattform (222b) in die Arbeitsstellung so geführt wird, daß der vertikale Abstand zwischen der hinteren Begrenzungskante (200) der zweiten Teilplattform (222b) und der vorderen Begrenzungskante (242) der dritten Teilplattform (222c) in der Arbeitsstellung kleiner ist als in der Ruhestellung.

15. Anlage zum Lackieren von Werkstücken, insbesondere von Fahrzeugkarosserien, umfassend eine Fördervorrichtung (100) zum Fördern der Werkstücke durch die Anlage und eine begehbare Plattformanordnung nach einem der Ansprüche 1 bis 14, welche sich in der Längsrichtung (102) der Fördervorrichtung (100) erstreckt und eine quer, vorzugsweise senkrecht, zur Längsrichtung (102) der Fördervorrichtung (100) ausgerichtete Ausziehrichtung (112) aufweist.
